(19) Europäisches Patentamt
European Patent Office
Office européen des brevets

(11) **EP 1 840 867 A2**

(12) **EUROPEAN PATENT APPLICATION**

(43) Date of publication:
**03.10.2007 Bulletin 2007/40**

(51) Int Cl.:
*G09G 3/34* *(2006.01)*

(21) Application number: **07103501.8**

(22) Date of filing: **05.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.03.2006 KR 20060027984**

(71) Applicant: **Samsung Electronics Co., Ltd.**
**Suwon-si, Gyeonggi-Do (KR)**

(72) Inventors:
• **Park, Jung-Hoon**
 c/o Samsung Electronics Co., Ltd.
 Suwon-si, Gyeonggi-do (KR)

• **Oh, Yun-Je**
 c/o Samsung Electronics Co., Ltd.
 Suwon-si, Gyeonggi-do (KR)
• **Cho, Sung-Dae**
 c/o Samsung Electronics Co., Ltd.
 Suwon-si, Gyeonggi-do (KR)
• **Jeong, Young-Min**
 c/o Samsung Electronics Co., Ltd.
 Suwon-si, Gyeonggi-do (KR)

(74) Representative: **Zimmer, Franz-Josef**
**Grünecker, Kinkeldey,**
**Stockmair & Schwanhäusser**
**Anwaltssozietät**
**Maximilianstrasse 58**
**80538 München (DE)**

(54) **Apparatus for driving the backlight unit of a display provided in a mobile communication terminal with an economical power and a method thereof**

(57)     Disclosed is an apparatus for driving the backlight unit of a display in a mobile communication terminal. The apparatus includes a storage device to store multimedia data, wherein the storage device receives power from an electric power source, a data processor to play the multimedia data, and a control unit to control the power of the backlight unit by evaluating the remaining time for playing the remaining part of the multimedia data and the remaining power of the electric power source during the playing.

FIG.1

EP 1 840 867 A2

**Description**

The present invention relates to an apparatus and method for effectively managing the drive power supplied, from an electric power source to the backlight unit, of a display in a mobile communication terminal, so as to prolong the life of the power source.

The recent developments in communication technology together with dramatically improved capacities of memory and display units has made it possible for mobile communication terminals to be used for playing moving pictures, reproducing MP3, mobile Internet, etc. Further, mobile communication terminals have been added with various additional functionalities, such as video or audio recording and multimedia playing. In particular, multimedia functionality enables mobile communication terminals to be used as the ultimate mobile entertainment system. Such communication terminals even include the Video on Demand (VOD) functionality. However, such expanded functionality causes the limited electric power source of the mobile communication terminal to be rapidly consumed, thereby remarkably decreasing its operating time.

Generally, the main factor causing rapid consumption of the power source in a mobile communication terminal is the backlight unit of the LCD. This, in turn, can cause an abrupt termination of multimedia data being played. The backlight unit is an essential element of the LCD for uniformly illuminating the LCD panel requiring uniform luminance. The rate of the power consumption of the backlight unit, including the inverter circuit for driving it, generally amounts to 30 to 50% of the total power consumption of the mobile communication terminal. One of the principal causes of such considerable power consumption is that the backlight unit is kept on (e.g. supplied with power) unless the user intentionally turns off the terminal. Accordingly, it is desirable for mobile communication terminals with a limited power source to effectively control the power consumption of the backlight unit.

The present invention relates to decreasing the power consumption of a mobile communication terminal (including terminals with a multimedia function). The decrease in power consumption is enabled by controlling the power consumption of the backlight unit according to the remaining time for playing the remaining part of multimedia data and the remaining power of the electric power source, while the multimedia data is being played.

It is the object of the present invention to provide a mobile communication terminal having a multimedia function that includes means to prevent an abrupt termination of the multimedia data while it is being played.

This object is solved by the subject matter of the independent claims.

Preferred embodiments are defined in the dependent claims.

According to an aspect of the present invention, there is provided an apparatus for driving a backlight unit of a display in a mobile communication terminal includes a storage device to store multimedia data, wherein the storage device receives power from an electric power source, a data processor to play the multimedia data, and a control unit to control the power of the backlight unit by evaluating a remaining time to play a remaining part of the multimedia data and a remaining power of the electric power source during the playing.

The above features and advantages of the present invention will become more apparent from the following detailed description when taken in conjunction with the accompanying drawing in which:

FIG. 1 is a block diagram of an apparatus for driving a backlight unit of a display provided in a mobile communication terminal according to an embodiment of the present invention;
FIGS. 2A to 2C respectively show a histogram, the cumulative distribution function (CDF) according to the histogram, and the result of the CDF;
FIG. 3 is a flowchart of the process of driving the backlight unit of a mobile communication terminal according to an embodiment of the present invention; and
FIG. 4 is a flowchart of the process of adjusting the luminance of multimedia data according to an embodiment of the present invention.

Exemplary embodiments of the present invention will be described with reference to the accompanying drawings. In the drawings, the same or similar elements are denoted by the same reference numerals even though they are depicted in different drawings. For the purposes of clarity and simplicity, well-known functions or constructions are not described in detail since they may obscure the invention in unnecessary detail.

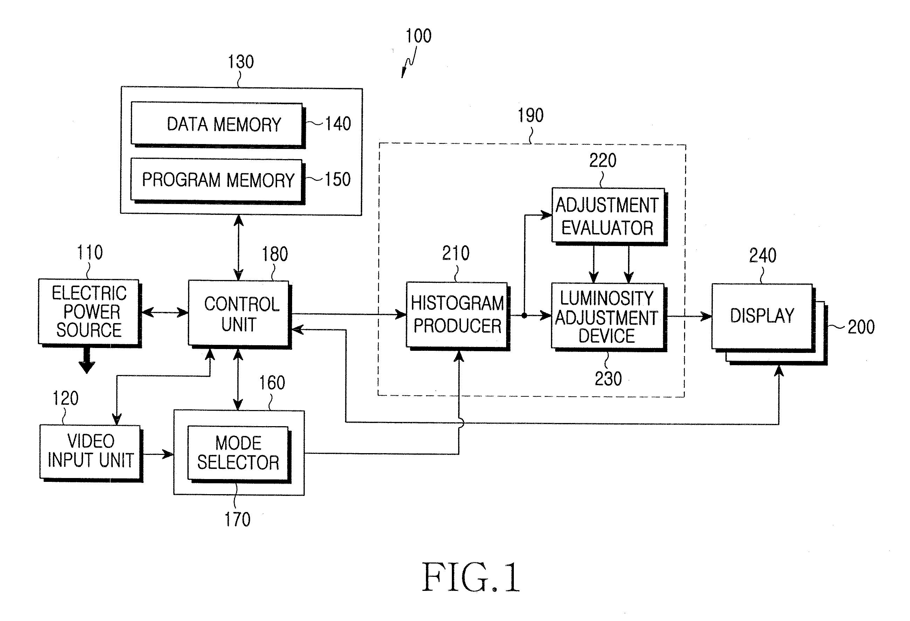

Fig. 1 shows the mobile communication terminal 100. Mobile communication terminal 100 includes an electric power source 110, a video input unit 120, a storage part 130, a data processor 160, a control unit 180, an adjustment part 190, a backlight unit 200, and a display 240. The electric power source 110 supplies the operational power of the mobile terminal 100. The video input unit 120 serves to input multimedia data such as audio/video data.

The storage part 130 includes (1) a data memory 140 to store multimedia data received both from the video input unit 120 and from an external DMB (Digital Multimedia Broadcasting) system, and (2) a program memory 150 to store the program data required to operate the mobile 100. The data processor 160 includes a mode selector 170 to select the real time play mode to play the multimedia data received from the DMB system in real time or the ordinary mode to play the multimedia data stored in the data memory 140.

The control unit 180 evaluates the remaining time to play the remaining part of the multimedia data and the remaining power of the electric power source 110, while the data processor 160 is playing the multimedia data. Thus, control unit 180 determines whether the remaining power is adequate to play the remaining part of the multimedia data. The remaining power of the electric power source 110 may be allowed to be consumed until of the remaining part of the multimedia data is completed. Otherwise, the control unit controls the driving power supplied from the electric power source 110 to the backlight unit 200 so as to fit the remaining power. In addition, the control unit 180 periodically evaluates the remaining time to play the remaining part of the multimedia and the remaining power of the electric power source 110, since voice or character messages received during the playing can consume the remaining power.

The adjustment part 190 produces a histogram (PDF: Probability Density Function) of the multimedia data to adjust the luminance thereof according to the controlled driving power. The adjustment part 190 includes a histogram producer 210, an adjustment evaluator 220, and a luminosity adjustment device 230. The display 240 includes an LCD panel to display the multimedia data and the backlight unit 200 mounted on the back of the LCD panel to uniformly illuminate the display 240.

The histogram (PDF) is used to analyze the distribution of the luminosities of the multimedia data. If the luminance of the multimedia data is relatively too dark because of a larger distribution of the pixels with low luminosities, the luminosities of the whole pixels are enhanced to make the image brighter. If luminance is relatively too bright because of a larger distribution of the pixels with high luminosities, the luminosities of the whole pixels are reduced to make the image darker. This, in turn, makes the multimedia data image more acceptable. And, the histogram is subjected to cumulative operations to produce a CDF.

The histogram producer 210 detects the luminosities of the whole pixels of the multimedia data to produce the histogram. The adjustment evaluator 220 calculates the mean luminosity the histogram. In this case, the mean luminosity is obtained by dividing the sum of all the luminosities on the histogram by the number of the whole pixels. Then, mean luminosity range is determined from among the luminosities levels of 0 to 255. For example, the luminosity levels of 0 to 255 are divided into four ranges each having 4 to 10 levels e.g. 0-30, 31-100, 101-159, 160-255, etc. The ranges are checked to discover the one in which the mean luminosity belongs. Then, the function value corresponding to the determined range is delivered to the luminosity adjustment device 230.

The luminosity adjustment device 230 compares the function value received from the adjustment evaluator 220 with the histogram outputted from the histogram producer 210. If the compared result shows that the histogram is less than the function value from the adjustment evaluator 220, the histogram is augmented and assigned to the function value. In addition, the luminosity adjustment device 230 successively carries out cumulative operation to the augmented function value so as to produce a CDF as defined in the following Formula 1:

Formula 1

$$CDF(K) = \sum_{i=0}^{R} PDF(i)$$

wherein i=0, 1, 2, 3 ... n, CDF(K) is a cumulative distribution function, and PDF(i) a probability density function.

In this case, the luminosity adjustment device 230 provides the cumulative distribution function having the maximum value equal to the total number of the pixels of the multimedia data. Thus, it produces the output luminance adjusted corresponding to the luminance of the multimedia data. The adjustment of the CDF is expressed by the following Formulae 2 and 3:

Formula 2

$$CDF'(K) = CDF(K) - \frac{CDF(N-1)}{N-1} K + F(K)$$

wherein CDF'(K) represents the adjusted cumulative distribution function, CDF(K) the cumulative distribution function before adjustment, F(K) the ratio of Number of Total Pixels/(N-1)K, N-1 the maximum luminosity, and CDF(N-1) the CDF value at the maximum luminosity.

Formula 3

$$G(K) = CDF'(K) X \frac{Maximum\ Luminosity}{Total\ Number\ of\ Multimedia\ Pixels}$$

wherein G(K) represents the ultimate cumulative distribution function, and CDF'(K) the adjusted cumulative distribution function.

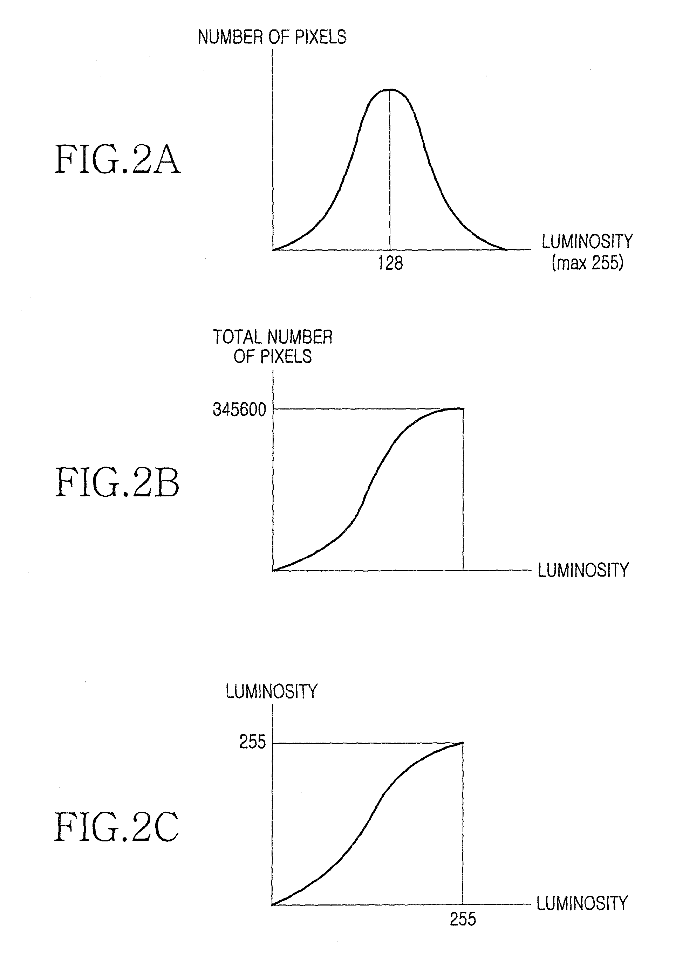

Referring to Fig. 2A, the histogram shows the number of pixels versus the luminosity levels of 0 to 255 of the multimedia data. Fig. 2B shows the graph obtained by transforming the histogram of Fig. 2A into the CDF. For example, if the multimedia data has a resolution of 720 x 480, the histogram is accumulated to have the ultimate cumulative value of 3456000. In addition, Fig. 2C represents the result of the CDF shown in Fig. 2B. The result shows the output luminosities corresponding to the luminosities of the pixels of the multimedia data. Hence, these luminosities are displayed in the display 240 according to the adjusted multimedia data.

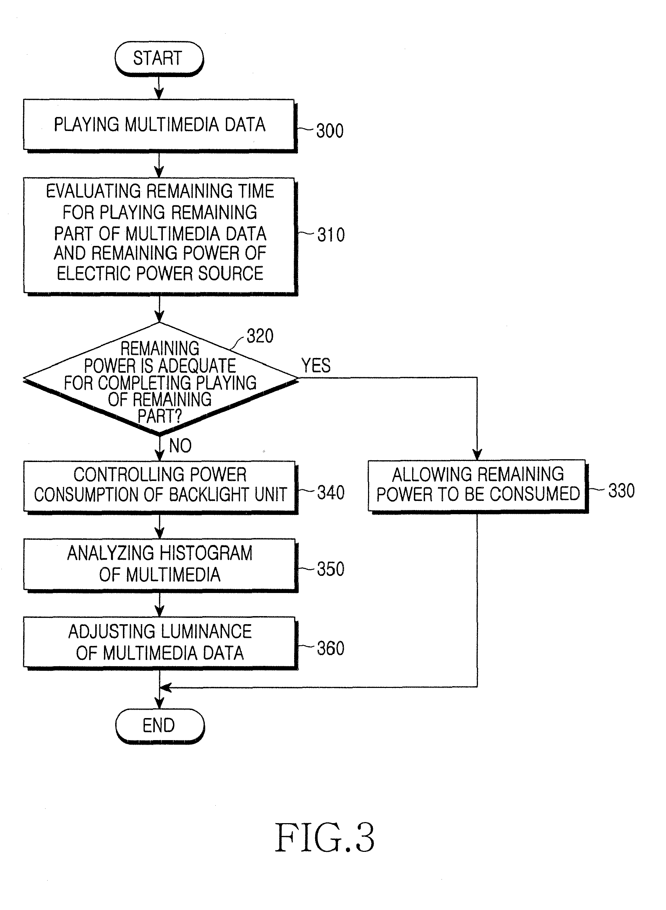

Hereinafter described in connection with Fig. 3 is the process of economically driving the power of the backlight unit of the mobile terminal according to the present invention. In step 300, the mobile terminal 100, powered by the electric power source 110, is operated by the user to play multimedia data received from a DMB system in the real time mode. The multimedia data is selected through the mode selector 170. The multimedia data may be displayed in the display 240 in real time. The multimedia data may also be played from the data memory 140 by selecting the ordinary play mode through the mode selector 170 of the data processor 160.

In step 310, the control unit 180 evaluates the remaining time to play the remaining part of the multimedia data and the remaining power of the electric power source 110, while the data processor 160 is playing the multimedia data. The control unit also periodically updates the remaining time and the remaining power whenever the remaining power is varied due to reception of voice or character message during the playing.

When the remaining power of the electric power source 110 is checked as not varied in step 320, the control unit determines whether the remaining power of the electric power source 110 is adequate for the data processor 160 to complete the playing of the remaining part of the multimedia data. If the remaining power of the electric power source 110 is adequate to play the remaining part of the multimedia data, the control unit allows the remaining power to be consumed in step 330. However, if the remaining power of the electric power source 110 is not adequate to play the remaining part of the multimedia data, the control unit reduces the driving power supplied to the backlight unit 200 in step 340.

Subsequently, in step 350, the adjustment part 190 analyzes the histogram of the multimedia data according to the driving power of the backlight unit 200 reduced under the control of the control unit 180. In step 360, the luminosity of each of the pixels of the multimedia data is adjusted. In this manner, the luminance of the multimedia data is adjusted such that the user does not to perceive the adjustment according to the reduced driving power of the backlight unit 200. Further, the power consumption of the mobile terminal 100 is reduced and the playing of the multimedia data is not abruptly terminated before completing the playing.

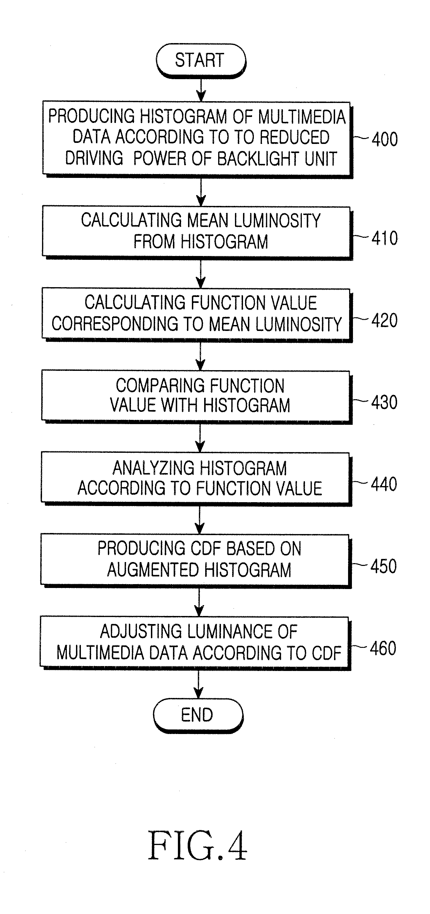

Referring to Fig. 4, described hereinafter is the process of adjusting the luminance of multimedia data. In step 400, the histogram producer 210 produces the histogram of the multimedia data played by the data processor 160 according to the driving power of the backlight unit 200. The produced histogram is reduced based on the evaluation of the remaining time of the remaining part of the multimedia and the remaining power of the electric power source 110.

Subsequently in step 410, the adjustment evaluator 220 calculates the mean luminosity from the histogram. In this case, the mean luminosity is obtained by dividing the sum of the luminosities distributed over the histogram by the total number of the pixels. Then, it is determined in which range the mean luminosity belongs from among the luminosities levels, e.g. 0 to 255. For example, the luminosity levels of 0 to 255 are divided into four ranges each having 4 to 10 levels, and the ranges are checked to determine which range the mean luminosity belongs. Then, the function value corresponding to the discovered range is delivered to the luminosity adjustment device. In this case, the function is a monotone function.

In step 430, the luminosity adjustment device 230 compares the function value received from the adjustment evaluator 220 with the histogram outputted from the histogram producer 210. If the compared result shows that the histogram is less than the function value, the histogram is augmented in step 440. The augmented histogram is subjected in step 450 to cumulative operation so as to produce a CDF. In this case, the c1umulative distribution function has the maximum value equal to the total number of the pixels of the multimedia data. Finally in step 460, the output luminance is adjusted corresponding to the luminance of the multimedia data. This is obtained by the Formula 3. Thus, the luminance of the multimedia data is adjusted according to the reduced driving power of the backlight unit 200 so that the user does not perceive the adjustment while the multimedia data is being displayed in display 240.

While the invention has been shown and described with reference to a certain preferred embodiment thereof, it will be understood by those skilled in the art that various changes in form and details may be made therein without departing from the scope of the invention.

## Claims

1. An apparatus for driving a backlight unit of a display in a mobile communication terminal, comprising:

   a storage device to store multimedia data, wherein the storage device receives power from an electric power source;
   a data processor to play said multimedia data; and
   a control unit to control the power of said backlight unit by evaluating a remaining time to play a remaining part of said multimedia data and a remaining power of said electric power source during the playing.

2. The apparatus as claimed in claim 1, further including an adjustment part to adjust the luminance of said multimedia data by analyzing a histogram of said multimedia data according to the remaining power evaluated.

3. The apparatus as claimed in claim 1 or 2, wherein said control unit periodically evaluates the remaining time to play the remaining part of said multimedia and the remaining power of said electric power source during the playing.

4. The apparatus as claimed in one of claims 1 to 3, wherein the multimedia data stored in said storage device is received from an external service provider or directly inputted by the user.

5. The apparatus as claimed in claim 3, wherein said data processor plays in real time the multimedia data received from an external service provider.

6. The apparatus as claimed in claim 2, wherein said adjustment part further includes:

   a histogram producer to produce the histogram representing a luminance distribution of the pixels of said multimedia data;
   an adjustment evaluator to calculate the mean luminosity of the luminosities of the pixels of said histogram to formulate an adjustment function corresponding to the range containing the mean luminosity; and
   a luminosity adjustment device to adjust said luminance distribution based on said adjustment function.

7. The apparatus as claimed in claim 6, wherein said luminosity adjustment device performs a cumulative operation to said adjustment function to obtain a cumulative distribution function having the maximum value equal to the total number of the pixels of said multimedia data.

8. A method for driving a backlight unit of a display in a mobile communication terminal, the method comprising the steps of:

   playing multimedia data stored in a storage device, wherein the storage device receives power from an electric power source; and
   controlling the power of said backlight unit by evaluating a remaining time to play a remaining part of said multimedia data and a remaining power of said electric power source during the playing.

9. The method as claimed in claim 8, further comprising the step of determining whether the remaining power is adequate to play the remaining part of said multimedia data.

10. The method as claimed in claim 8 or 9, further comprising the step of reducing the driving power of said backlight unit if the remaining power is not adequate for playing the remaining part of said multimedia data.

11. The method as claimed in one of claims 8 to 10, further including the further step of checking periodically whether the remaining power of said electric power source is varied with reference to the remaining time to play the remaining part of said multimedia data.

12. The method as claimed in one of claims 8 to 11, further including the step of adjusting the luminosities of the pixels constituting said multimedia data according to the reduced driving power of said backlight unit.

**13.** The method as claimed in one of claims 8 to 12, further including the step of allowing the remaining power to be consumed if it is adequate to play the remaining part of said multimedia data.

**14.** The method as claimed in one of claims 8 to 13, wherein the step of playing said multimedia data is to play the multimedia data received from an external service provider in real time.

**15.** The method as claimed in claim 14, further including the step of evaluating again the remaining time to playing the remaining part of said multimedia data and the remaining power of said electric power source when the remaining power is checked as varied.

**16.** The method as claimed in claim 12, wherein the step of adjusting the luminosities of the pixels constituting said multimedia data further comprises the steps of:

producing the histogram representing a luminance distribution of the pixels of said multimedia data;
calculating the mean luminosity of the luminosities of the pixels of said histogram to formulate an adjustment function;
increasing said histogram if it is less than said adjustment function;
performing a cumulative operation to said histogram to obtain a cumulative distribution function; and
adjusting the luminance of said multimedia data according to said cumulative distribution function.

FIG.1

FIG.2A

NUMBER OF PIXELS

128

LUMINOSITY
(max 255)

FIG.2B

TOTAL NUMBER
OF PIXELS

345600

LUMINOSITY

FIG.2C

LUMINOSITY

255

255

LUMINOSITY

START

PLAYING MULTIMEDIA DATA — 300

EVALUATING REMAINING TIME
FOR PLAYING REMAINING
PART OF MULTIMEDIA DATA — 310
AND REMAINING POWER OF
ELECTRIC POWER SOURCE

REMAINING
POWER IS ADEQUATE — 320
FOR COMPLETING PLAYING
OF REMAINING
PART?

YES

NO

CONTROLLING POWER
CONSUMPTION OF BACKLIGHT UNIT — 340

ALLOWING REMAINING
POWER TO BE CONSUMED — 330

ANALYZING HISTOGRAM
OF MULTIMEDIA — 350

ADJUSTING LUMINANCE
OF MULTIMEDIA DATA — 360

END

FIG.3

```
                    ┌─────────┐
                    │  START  │
                    └────┬────┘
                         │
    ┌────────────────────▼────────────────────┐
    │  PRODUCING HISTOGRAM OF MULTIMEDIA       │
    │  DATA ACCORDING TO TO REDUCED            ├── 400
    │  DRIVING POWER OF BACKLIGHT UNIT         │
    └────────────────────┬────────────────────┘
                         │
    ┌────────────────────▼────────────────────┐
    │  CALCULATING MEAN LUMINOSITY             │
    │  FROM HISTOGRAM                          ├── 410
    └────────────────────┬────────────────────┘
                         │
    ┌────────────────────▼────────────────────┐
    │  CALCULATING FUNCTION VALUE              │
    │  CORRESPONDING TO MEAN LUMINOSITY        ├── 420
    └────────────────────┬────────────────────┘
                         │
    ┌────────────────────▼────────────────────┐
    │  COMPARING FUNCTION                      │
    │  VALUE WITH HISTOGRAM                    ├── 430
    └────────────────────┬────────────────────┘
                         │
    ┌────────────────────▼────────────────────┐
    │  ANALYZING HISTOGRAM                     │
    │  ACCORDING TO FUNCTION VALUE             ├── 440
    └────────────────────┬────────────────────┘
                         │
    ┌────────────────────▼────────────────────┐
    │  PRODUCING CDF BASED ON                  │
    │  AUGMENTED HISTOGRAM                     ├── 450
    └────────────────────┬────────────────────┘
                         │
    ┌────────────────────▼────────────────────┐
    │  ADJUSTING LUMINANCE OF                  │
    │  MULTIMEDIA DATA ACCORDING TO CDF        ├── 460
    └────────────────────┬────────────────────┘
                         │
                    ┌────▼────┐
                    │   END   │
                    └─────────┘
```

# FIG.4